# FASCICULE DE BREVET EUROPEEN

(11) **EP 0 443 906 B1**
(45) Date de publication et mention de la délivrance du brevet: **22.06.1994**
(21) Numéro de dépôt: 91400339.7
(22) Date de dépôt: 12.02.1991
(51) Int. Cl.: H04N 5/33

(54) **Caméra bispectrale à commutation de spectre**
Zweispektrumkamera mit Spektrumumschaltung
Bispectral camera with spectrum switching

(30) Priorité: 16.02.1990 FR 9001881
(43) Date de publication de la demande: 28.08.1991
(73) Titulaire: THOMSON VIDEO EQUIPEMENT, 95800 Cergy-Saint-Christophe (FR)
(72) Inventeur: Dujardin, Stéphane, F-92045 Paris la Défense (FR)
(74) Mandataire: Courtellemont, Alain

(56) Documents cités:
- FR-A- 2 612 030
- US-A- 4 562 463
- US-A- 4 679 068
- PATENT ABSTRACTS OF JAPAN, vol. 9, no. 136 (E-320)[1859], 12 juin 1985;& JP-A-60 18 073

## Description

La présente invention se rapporte à une caméra de surveillance bispectrale notamment pour des applications en aviation et pour la surveillance des locaux.

Une caméra bispectrale permet de visualiser sur un même moniteur deux images simultanées du même objet dans des spectres différents, par exemple, spectre visible (longueurs d'onde comprises entre 400 et 750 nanomètres) et spectre proche infrarouge (longueurs d'onde comprises entre 750 et 1500 nanomètres) de façon à faire apparaître, sur le moniteur, des détails de l'image invisibles à l'oeil nu et à réflectance élevée en proche infrarouge.

Classiquement, comme le montre la figure 1, une caméra bispectrale, selon l'art antérieur p.ex FR-A-2612030, comprend essentiellement un objectif 10 recevant les rayons lumineux derrière lequel est disposé un séparateur optique 11 composé d'un prisme dans lequel le trajet de chaque rayon lumineux est dévié dans deux directions différentes. Derrière le prisme séparateur 11, sur chacun des deux trajets des rayons lumineux et perpendiculairement à ceux-ci, est placé un filtre 12,13 puis un capteur d'images 14,15, chacun des filtres laissant passer un spectre de fréquences différent. Par exemple, pour une caméra bispectrale du type visible/proche infrarouge, l'un des filtres 12 ne laisse passer que les longueurs d'onde situées dans le proche infrarouge c'est-à-dire comprises entre 750 et 1500 nanomètres, l'autre filtre 13 ne laisse passer que les longueurs d'onde situées dans le visible c'est-à-dire comprises entre 400 et 750 nanomètres.

Une telle caméra bispectrale nécessite un assemblage optique et des réglages mécaniques précis des deux capteurs (ajustement des positions xy des capteurs pour aligner leurs centres optiques) afin que les deux images provenant de chacun des capteurs se superposent correctement pour préserver une image de bonne qualité sur le moniteur de visualisation. Par ailleurs, cette technique est lourde car chaque capteur est associé à un dispositif de traitement électronique et le prix est prohibitif en comparaison de la qualité de l'image obtenue. De plus, l'utilisation d'un séparateur optique n'est pas compatible avec l'utilisation d'un objectif normalisé dit à monture C, car ses dimensions sont trop importantes, et la superposition des deux images est effectuée, a posteriori, par un calculateur.

Il existe des capteurs d'image sensibles dans deux spectres de fréquences différents p.ex US-A-4679068, mais une image obtenue à partir de tels capteurs n'est pas suffisamment contrastée pour apporter des informations supplémentaires par rapport à une image unispectrale et n'est donc pas exploitable en tant qu'image bispectrale.

Pour résoudre ces problèmes et obtenir une caméra bispectrale à coût moindre, permettant l'utilisation d'un objectif à monture C et présentant, à l'utilisateur, une image bispectrale en temps réel ayant un bon contraste, la caméra bispectrale, selon l'invention, ne comporte qu'un seul capteur d'images sensible dans deux spectres de fréquences différents associé à un système à valve optique et comporte en outre une mémoire de trame, tel que la valve optique laisse passer alternativement, selon la trame de l'image, l'un et/ou l'autre des deux spectres, permettant ainsi de séparer les deux spectres afin d'en effectuer un traitement vidéo différent pour renforcer le contraste de l'image ; les signaux correspondant à chacun des deux spectres étant alors à 25Hz, la mémoire de trame a pour rôle de mémoriser le signal de la trame courante pour ne le transmettre qu'à la trame suivante afin d'obtenir des signaux à 50Hz ;la mémoire de trame associée à un circuit de traitement vidéo adapté permet donc de recomposer l'image à 50 Hz afin de présenter, en temps réel, une image bispectrale de bonne qualité à l'utilisateur.

La caméra bispectrale à commutation de spectre, selon l'invention comportant principalement un objectif définissant un trajet optique de la caméra, derrière lequel est placé un capteur d'images sensible aux longueurs d'ondes appartenant à deux spectres différents et associé à un dispositif de traitement vidéo restituant une image en deux trames, est caractérisée en ce que sur le trajet optique de la caméra, entre l'objectif et le capteur d'images, est interposée une valve optique destinée à laisser passer alternativement au rythme trame, au moins l'un des deux spectres puis seulement l'autre spectre, et en ce que le dispositif de traitement vidéo comporte une mémoire de trame, destinée à mémoriser la trame courante pour la retransmettre en même temps que la trame suivante, et un circuit électronique destiné à recevoir respectivement sur deux entrées la trame mémorisée par la mémoire de trame et la trame courante issue du capteur d'images et à effectuer, en parallèle, la reconstitution, au rythme trame, des deux trames de l'image dans l'un des spectres et des deux trames de l'image dans l'autre spectre.

D'autres particularités et avantages de l'invention apparaîtront clairement dans la description suivante donnée à titre d'exemple non limitatif et faite en regard des figures annexées qui représentent :
- la figure 1 précitée, une caméra bispectrale, selon l'art antérieur ;
- la figure 2, une caméra bispectrale à valve optique, selon l'invention ;
- la figure 3, un exemple de valve optique à cristaux liquides de type ferroélectrique ;
- la figure 4, la transmittance d'une valve à cristaux liquides en fonction de la longueur d'onde ;
- la figure 5, un exemple de dispositif de reconstitution de l'image bispectrale, selon l'invention ;
- la figure 6, un tableau récapitulatif des signaux en différents points du dispositif de reconstitution de l'image bispectrale, selon la trame de l'image.

L'utilisation d'une valve optique et d'une mémoire de trame permet de reconstituer une image bispectrale à 50Hz, en temps réel. La valve optique est un dispositif de faibles dimensions, par exemple 16mm de diamètre et 2mm d'épaisseur, et peut donc être interposée sur le trajet optique d'une caméra classique, par exemple noir et blanc, à monture C, entre l'objectif de la caméra et un capteur d'image du type CCD ou un tube du type Newdicon, sans modification de l'optique. Il existe plusieurs types de valves optiques choisies en fonction des applications souhaitées ; par exemple, pour une caméra bispectrale fiable, la préférence ira aux valves optiques à cristaux liquides car leur fonctionnement ne nécessite pas l'intervention de moyens mécaniques.

Les spectres de fréquences les plus utilisés actuellement étant les spectres visible et proche infrarouge, la suite de la description sera limitée à l'exemple d'une caméra bispectrale visible/proche infrarouge. Mais il est bien entendu que l'invention peut être étendue à n'importe quels spectres de fréquences, à condition de choisir un capteur d'images et une valve optique appropriés.

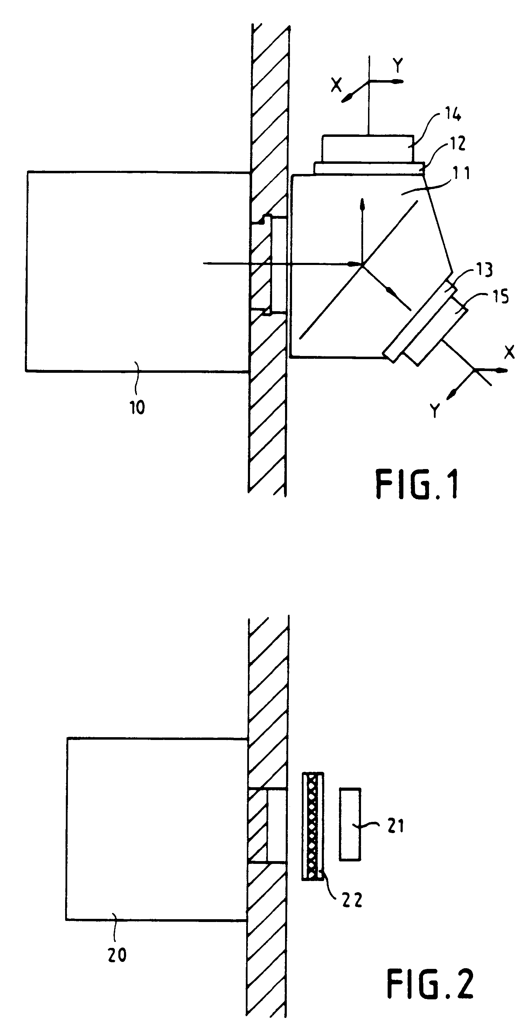

La figure 2 représente une caméra bispectrale à valve optique, selon l'invention. Cette caméra se compose d'un objectif, 20, de préférence traditionnel à monture C, et d'un capteur d'images, 21, sensible aux longueurs d'ondes visibles et proches infrarouge, tel que par exemple un capteur du type CCD ou un tube du type Newdicon, entre lesquels est intercalée une valve optique, 22, visible/proche infrarouge. La valve optique, 22, permet de séparer les deux spectres visible et proche infrarouge afin d'obtenir, après un traitement vidéo différent de chacun des spectres, alternativement selon la trame de l'image, une image dans le spectre visible VI et une image dans le spectre proche infrarouge IR. Pour que l'oeil de l'observateur ne soit pas gêné par des images à 25 Hz correspondant à chaque trame, une mémoire de trame non représentée est ajoutée, par exemple sur une carte électronique de la caméra, pour stocker, en sortie du capteur d'images, l'information de la première trame et la transmettre en même temps que la trame suivante de façon à reconstituer des images visible et proche infrarouge à 50Hz. De cette façon, la superposition des deux images infrarouge et visible permet de reconstituer, en temps réel, une image à 50Hz bispectrale.

La valve optique peut être, par exemple, une valve à cristaux liquides, LCD (en anglais : Liquid cristal device).

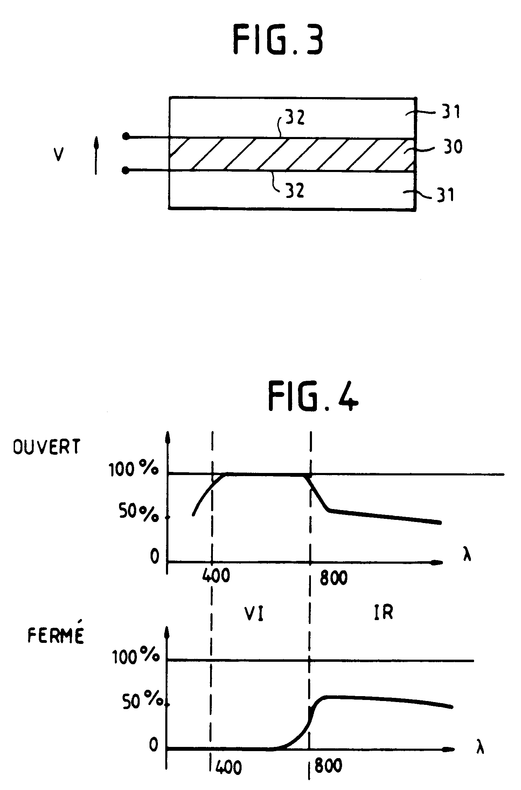

La figure 3 représente un exemple de valve optique à cristaux liquides de type ferroélectrique. Cette valve est constituée d'un mince film de cristal liquide ferroélectrique, 30, pris en sandwich entre deux lames de verre, 31. Les faces internes de chaque lame de verre sont recouvertes d'électrodes transparentes,32, permettant d'appliquer une tension électrique,V, sur le film.

La figure 4 représente la transmittance d'une valve à cristaux liquides en fonction de la longueur d'onde,

Lorsqu'une tension positive, +V, est appliquée sur les électrodes, la valve optique est ouverte, c'est-à-dire qu'elle est transparente à la fois à la lumière visible, VI, et à la lumière proche infrarouge, IR ; tandis que lorsque la tension est négative, -V, la valve optique est fermée et ne laisse passer que la lumière proche infrarouge, IR.

Sur la figure 4, la lumière proche infrarouge, IR, est transmise à 50% quelle que soit la tension appliquée sur les électrodes alors que la lumière visible, VI, est transmise à 100% lorsque la valve est ouverte, et à 0% lorsque la valve est fermée.

Un autre type de valve optique peut être utilisé, tel que, par exemple, une valve à rondelle motorisée. Une telle valve, constituée de deux demi-disques reliés entre eux de façon à former une rondelle, est placée dans le trajet optique de la caméra entre l'objectif et le capteur d'images, les faces de la rondelle étant perpendiculaires au trajet optique. Chaque demi-disque est réalisé dans un verre traité différemment, de façon, par exemple, que l'un des demi-disques laisse passer la lumière visible et la lumière proche infrarouge, l'autre demi-disque laisse passer seulement la lumière proche infrarouge. Un moteur fait tourner la valve devant le capteur d'image de façon à présenter alternativement, selon la trame de l'image, l'un des demi-disques puis l'autre et à laisser passer soit tout le spectre visible et proche infrarouge, soit seulement le spectre proche infrarouge. La surface de séparation des deux demi-disques est réfléchissante et sert de repère à un système d'asservissement lié au moteur qui fait tourner l'ensemble devant le capteur d'images. La surface de séparation permet également d'éliminer le phénomène connu sous le nom anglais "smear", correspondant à un lignage vertical lié aux caméras CCD, dans le cas de l'utilisation d'un capteur d'image CCD de type transfert de trame. Mais une telle valve optique est mécaniquement peu fiable.

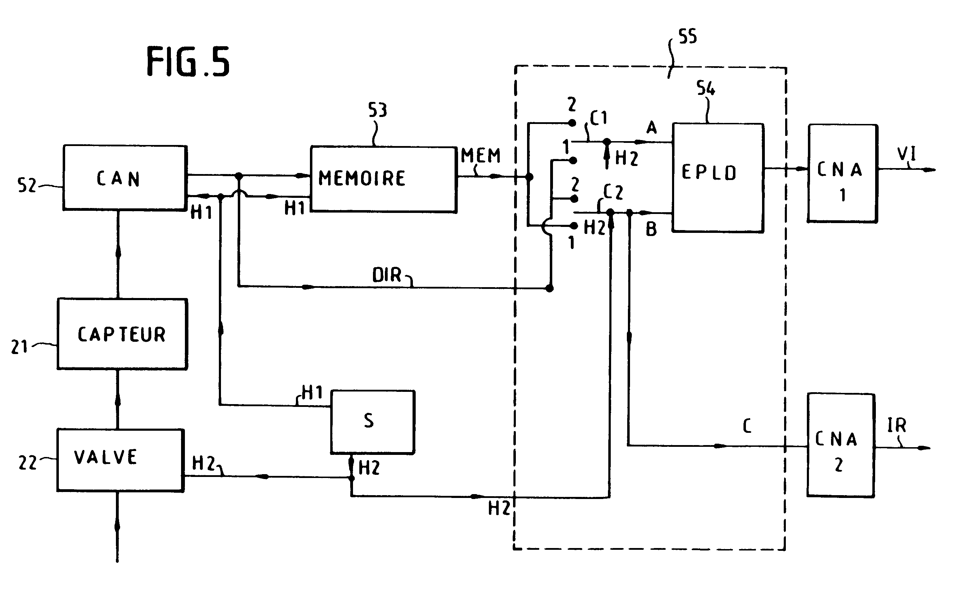

La figure 5 représente un exemple de dispositif de reconstitution de l'image bispectrale, selon l'invention. La mémoire de trame ainsi que le traitement électronique pour reconstituer l'image bispectrale à 50Hz peuvent être, par exemple, disposés sur une carte option de la caméra.
Une image étant constituée de deux trames, pour chacune des trames le signal de sortie du capteur d'image, 21, est numérisé, par exemple sur 8 bits, dans un convertisseur analogique/numérique, 52, puis mémorisé dans une mémoire de trame, 53. La mémoire de trame a pour rôle de mémoriser la trame courante afin de la transmettre en même temps que la trame suivante. Le signal de sortie, DIR, du convertisseur analogique/numérique 52, et le signal de sortie MEM, de la mémoire, 53, sont transmis à un circuit électronique, 55, qui délivre en sortie d'une part, un signal à 50Hz correspondant à l'image visible et d'autre part, un signal à 50Hz correspondant à l'image proche infrarouge. Pour cela, le circuit électronique, 55, comporte des moyens de commutation C1,C2, qui permettent de sélectionner l'un ou l'autre des signaux DIR et MEM selon que la trame courante est la première ou la seconde trame de l'image, et pour obtenir l'image visible, un circuit logique programmable, 54, du type "electronic programmable logic device", EPLD, qui reçoit sur deux entrées A,B, les signaux sélectionnés par les moyens de commutation C1 et C2 et délivre en sortie un signal numérique correspondant à l'image visible, ce signal étant converti ensuite en signal analogique par un convertisseur numérique/analogique, CNA1. Pour l'image proche infrarouge, le signal sélectionné par les moyens de commutation C2 correspondant déjà à l'image numérique proche infrarouge, est converti en signal analogique par un convertisseur numérique/analogique, CNA2.

Un dispositif de synchronisation, S, délivre d'une part, un signal d'horloge H1, au rythme pixel qui commande la conversion du signal analogique en signal numérique dans le convertisseur analogique/numérique 52 et la mise en mémoire du signal numérique dans la mémoire 53, et d'autre part, un signal d'horloge H2, au rythme trame qui commande le fonctionnement de la valve 22 et des moyens de commutation C1,C2.

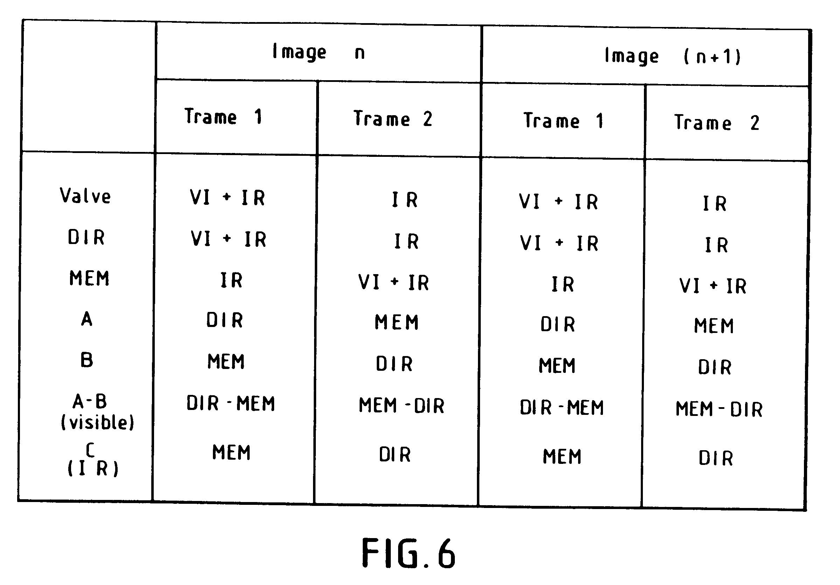

La figure 6 représente un tableau récapitulatif montrant les valeurs des signaux en différents points du dispositif de la figure 5, selon la trame de l'image.

Le fonctionnement du dispositif de reconstitution de l'image est le suivant : pendant la première trame (respectivement la seconde trame) de l'image, la valve, 22, est ouverte (respectivement fermée) et laisse passer à la fois les spectres visible et proche infrarouge (respectivement seulement le spectre proche infrarouge), et le signal en sortie du capteur d'image, 21, comporte donc des informations appartenant à l'image visible et à l'image proche infrarouge (respectivement seulement à l'image proche infrarouge). Ces informations sont numérisées dans le convertisseur analogique/numérique, 52, pour constituer le signal DIR, et mémorisées dans la mémoire, 53, pour constituer le signal MEM. Les signaux DIR et MEM (signaux à 25 Hz) correspondent donc alternativement, selon la trame de l'image, à tout le spectre visible et proche infrarouge ou seulement au spectre proche infrarouge. La reconstitution d'un rythme d'images à deux trames (signaux à 50 Hz) s'effectue donc de la manière suivante : Dans le circuit électronique, 55, les moyens de commutation C1,C2, sont mis en position 1 (respectivement 2) de façon à ce que,
- d'une part, quelle que soit la trame de l'image, l'entrée A du dispositif 54 reçoive des informations correspondant à l'image visible et à l'image proche infrarouge et son entrée B reçoive des informations correspondant seulement à l'image proche infrarouge, afin de reconstituer, en sortie, les deux trames de l'image visible en effectuant, au rythme trame, la différence des signaux arrivant sur chacune des entrées A et B
- et d'autre part quelle que soit la trame de l'image, l'entrée C du convertisseur numérique/analogique, CNA2, reçoive le signal numérique correspondant seulement à l'image proche infrarouge, et délivre en sortie le signal analogique correspondant aux deux trames de l'image proche infrarouge reconstituée.

Les images visible et proche infrarouge en sortie des convertisseurs numérique/analogique CNA1 et CNA2 sont alors transmises à un moniteur, non représenté, où les deux images sont superposées pour visualiser une image bispectrale.

L'observation de l'image bispectrale peut être effectuée sur un moniteur noir et blanc ou un moniteur couleur. Sur un moniteur couleur à trois voies, les différences entre l'image visible et l'image proche infrarouge seront avantageusement coloriées, par exemple, en modulant l'amplitude des voies verte et rouge du moniteur respectivement par le signal visible et le signal proche infrarouge pour que l'image visible soit représentée par le vert sur le moniteur et l'image proche infrarouge soit représentée par le rouge sur le moniteur.

Sur un moniteur noir et blanc, les différences entre l'image visible et l'image proche infrarouge seront seules présentées. Ce qui signifie que le signal d'entrée du moniteur noir et blanc sera le signal obtenu après avoir effectué, dans un circuit électronique adéquat, non représenté, la différence, VI-IR, entre le signal correspondant à l'image visible et le signal correspondant à l'image proche infrarouge.

L'invention n'est pas limitée aux exemples de réalisation précisément décrits, elle peut s'appliquer à d'autres spectres, tels que, par exemple, des spectres visible/ultraviolet, à condition d'utiliser une valve optique et un capteur d'images adaptés.

De même il est possible d'utiliser une valve optique laissant passer, alternativement, au rythme trame, soit l'un des spectres, soit l'autre spectre. Dans ce cas, le dispositif de reconstitution de l'image bispectrale est plus simple car le circuit, 54 de type EPLD n'est plus nécessaire. Cependant, actuellement de telles valves optiques sont du type valve à rondelle motorisée et donc peu fiables mécaniquement.

## Revendications

1. Caméra bispectrale à commutation de spectre comportant principalement un objectif (20) définissant un trajet optique de la caméra, derrière lequel est placé un capteur d'images (21) sensible aux longueurs d'ondes appartenant à deux spectres différents et associé à un dispositif de traitement vidéo restituant une image en deux trames, caractérisée en ce que sur le trajet optique de la caméra, entre l'objectif (20) et le capteur d'images (21), est interposée une valve optique (22) destinée à laisser passer alternativement au rythme trame, au moins l'un des deux spectres puis seulement l'autre spectre, et en ce que le dispositif de traitement vidéo comporte une mémoire de trame (53), destinée à mémoriser la trame courante pour la retransmettre en même temps que la trame suivante, et un circuit électronique (55) destiné à recevoir respectivement sur deux entrées la trame mémorisée par la mémoire de trame ( 53 ) et la trame courante issue du capteur d'images (21) et à effectuer, en parallèle, la reconstitution, au rythme trame, des deux trames de l'image dans l'un des spectres et des deux trames de l'image dans l'autre spectre.

2. Caméra bispectrale selon la revendication 1, caractérisée en ce que la valve optique est une valve à cristaux liquides de type ferroélectrique.

3. Caméra bispectrale selon la revendication 1, caractérisée en ce que la valve optique est une valve à rondelle motorisée.

4. Caméra bispectrale selon l'une quelconque des revendications précédentes, caractérisée en ce que les deux spectres sont le spectre visible et le spectre proche infrarouge.

5. Caméra bispectrale selon la revendication 4, caractérisée en ce que la valve optique (22), laisse passer alternativement au rythme trame, les deux spectres visible et proche infrarouge puis seulement le spectre proche infrarouge.

6. Caméra bispectrale selon l'une quelconque des revendications 4 et 5, caractérisée en ce que l'image bispectrale est visualisée sur un moniteur couleur à trois voies en modulant l'amplitude de deux des trois voies du moniteur respectivement par le signal visible et le signal proche infrarouge.

## Patentansprüche

1. Kamera mit zwei Spektren und Spektrumsumschaltung, die insbesondere ein den Strahlengang der Kamera definierendes Objektiv (20) enthält, hinter dem ein für die Wellenlängen der beiden unterschiedlichen Spektren empfindlicher Bildaufnehmer angeordnet ist, der einer Vorrichtung zur Videoverarbeitung zugeordnet ist, um ein Bild mit zwei Halbbildern wiederzugeben, dadurch gekennzeichnet, daß im Strahlengang der Kamera zwischen dem Objektiv (20) und dem Bildaufnehmer (21) ein optisches Ventil (22) eingefügt ist, das abwechselnd im Halbbildrhythmus erst mindestens eines der beiden Spektren und dann nur das andere Spektrum durchlassen soll, und daß die Vorrichtung zur Videoverarbeitung einen Halbbildspeicher (53), der das laufende Halbbild speichern und gleichzeitig mit dem nächsten Halbbild abgeben soll, und eine elektronische Schaltung (55) enthält, die an zwei Eingängen das im Halbbildspeicher (53) gespeicherte Halbbild und das vom Bildaufnehmer kommende laufende Halbbild empfängt und parallel die beiden Halbbilder des Bilds im Halbbildrhythmus in einem der Spektren und der beiden Halbbilder im anderen Spektrum zusammensetzt.

2. Kamera mit zwei Spektren nach Anspruch 1, dadurch gekennzeichnet, daß das optische Ventil ein Ventil mit Flüssigkristallen vom ferroelektrischen Typ ist.

3. Kamera mit zwei Spektren nach Anspruch 1, dadurch gekennzeichnet, daß das optische Ventil ein Ventil mit motorisch angetriebener Scheibe ist.

4. Kamera mit zwei Spektren nach einem der beliebigen vorhergehenden Ansprüche, dadurch gekennzeichnet, daß die beiden Spektren das Spektrum des sichtbaren Lichts und das des nahen Infrarotlichts sind.

5. Kamera mit zwei Spektren nach Anspruch 4, dadurch gekennzeichnet, daß das optische Ventil (22) abwechselnd im Halbbildrhythmus die beiden Spektren des sichtbaren und nahen Infrarotbereichs und dann nur das Spektrum des nahen Infrarotbereichs durchläßt.

6. Kamera mit zwei Spektren nach einem beliebigen der Ansprüche 4 und 5, dadurch gekennzeichnet, daß das Bild aus zwei Spektren auf einem Farbmonitor mit drei Kanälen sichtbar gemacht wird, indem die Amplitude von zwei der drei Farbkanälen des Monitors mit dem Signal des sichtbaren Bildes bzw. dem Signal des nahen Infrarotbilds moduliert wird.

## Claims

1. Bispectral camera with spectrum switching principally including an objective lens (20) defining an optical path of the camera, behind which is placed an image sensor (21) sensitive to the wavelengths belonging to two different spectra and associated with a vided-processing device reproducing an image in two frames, characterized in that, on the optical path of the camera, between the objective lens (20) and the image sensor (21), is interposed an optical valve (22) intended to let through alternately, at the frame rate, at least one of the two spectra then only the other spectrum and in that the video processing device includes a frame memory (53), intended to hold the current frame so as to retransmit it at the same time as the following frame, and an electronic circuit (55) intended to receive, respectively on two inputs, the frame held by the frame memory (53) and the current frame originating from the image sensor (21) and, in parallel, to reproduce, at the frame rate, the two frames of the image in one of the spectra and the two frames of the image in the other spectrum.

2. Bispectral camera according to Claim 1, characterized in that the optical valve is a ferroelectric-type liquid-crystal valve.

3. Bispectral camera according to Claim 1, characterized in that the optical valve is a motorized rondel valve.

4. Bispectral camera according to any one of the preceding claims, characterized in that the two spectra are the visible spectrum and the near infrared spectrum.

5. Bispectral camera according to Claim 4, characterized in that the optical valve (22) lets through alternately, at the frame rate, the two visible and near infrared spectra then only the near infrared spectrum.

6. Bispectral camera according to either of Claims 4 and 5, characterized in that the bispectral image is viewed on a three-channel colour monitor by modulating the amplitude of two of the three channels of the monitor respectively by the visible signal and the near infrared signal.
